Europäisches Patentamt

European Patent Office

Office européen des brevets

(11) Numéro de publication : **0 007 264**
**B1**

(12) **FASCICULE DE BREVET EUROPÉEN**

(45) Date de publication du fascicule du brevet :
23.12.81

(21) Numéro de dépôt : 79400414.3

(22) Date de dépôt : 21.06.79

(51) Int. Cl.³ : **F 16 G 13/18, B 65 G 17/08,
B 66 B 9/14**

(54) **Chaîne à un seul sens de courbure et application à une main courante.**

(30) Priorité : 11.07.78 FR 7820595

(43) Date de publication de la demande :
23.01.80 (Bulletin 80/02)

(45) Mention de la délivrance du brevet :
23.12.81 Bulletin 81/51

(84) Etats contractants désignés :
**BE CH DE GB IT NL SE**

(56) Documents cités :
FR - A - 1 289 507
FR - A - 1 450 845
FR - A - 2 274 523

(73) Titulaire : **Régie Autonome des Transports Parisiens
53 ter, Quai des Grands-Augustins
F-75006 Paris (FR)**

(72) Inventeur : **Plagne, Jean
13, avenue Carnot
F-94100 St.-Maur-des-Fossés (FR)**
Inventeur : **Patin, Pierre
15, rue Buffon
F-75005 Paris (FR)**

(74) Mandataire : **Plagne, Jean
c/o RATP 120, rue Réaumur
F-75002 Paris (FR)**

Imprimerie Jouve, 17, rue du Louvre, 75001 Paris, France

## Chaîne à un seul sens de courbure et application à une main courante

La présente invention concerne une chaîne à un seul sens de courbure, c'est-à-dire dont chaque maillon ne peut librement aller que d'un côté par rapport à la ligne des axes des maillons adjacents ; ainsi, elle peut s'enrouler autour de deux pignons tout en étant pratiquement sans flèche entre ceux-ci sous l'action d'un effort tendant à l'appliquer contre eux.

On connaît des chaînes à un seul sens de courbure ; elles sont utilisées notamment dans le domaine des convoyeurs de marchandises. Un mode de réalisation connu de telles chaînes est décrit dans le brevet français n° 1 297 285. Une réalisation voisine est décrite dans le brevet français n° 2 207 069. Ce type de chaîne est parfaitement adapté à certaines applications, notamment pour des unités de manutention. Par contre, il présente l'inconvénient de ne pas s'adapter à des faibles valeurs de pas, donc à des pignons de renvoi de petit diamètre, car chaque maillon deviendrait petit et les impératifs de précision dimensionnelle et de robustesse conduiraient à un coût prohibitif compte tenu de grand nombre de maillons alors nécessaire.

Un autre type de chaîne à un seul sens de courbure est décrit dans la demande de brevet français n° 2 274 523 de la demanderesse. La chaîne à un seul sens de courbure est constituée par une chaîne normale surmontée de plots jointifs qui suppriment toute possibilité de flexion dans le demi-plan où ils se trouvent. Mais une telle chaîne ne reprend pas les efforts tranchants, ainsi les jeux et les allongements élastiques des maillons conduisent à un fléchissement « en marches d'escalier » d'un brin de chaîne en appui entre deux pignons. Ce fléchissement devient rapidement rédhibitoire dès qu'un effort sensible est appliqué sur ce brin.

Le but de la présente invention est de définir une chaîne à un seul sens de courbure pouvant à la fois être réalisée simplement, être robuste, supporter des charges sans prendre de flèche importante, et s'enrouler sur des pignons de faible diamètre.

La chaîne à un seul sens de courbure selon l'invention est constituée d'une chaîne classique comportant à intervalles réguliers un maillon auquel est fixé un bloc présentant au moins deux faces rectilignes coplanaires et tangentes aux axes dudit maillon et s'étendant chacune sur une longueur égale audit intervalle, respectivement de part et d'autre dudit maillon dans le sens longitudinal de la chaîne, lesdites faces rectilignes étant disposées en quinconce.

Avantageusement, lesdites faces sont au nombre de trois, une centrale et deux latérales, la face centrale d'un bloc venant s'intercaler entre les deux faces latérales du bloc contigu.

Dans un mode particulier de réalisation, chacun desdits blocs comporte en outre un système de réglage venant en appui contre le bloc contigu. Avantageusement, ce système consiste en une vis dont la tête vient en appui contre une face verticale du bloc contigu.

D'autres caractéristiques de la présente invention apparaîtront à l'étude de l'exemple donné ci-après à titre nullement limitatif, en regard du dessin annexé dans lequel :

la figure 1 représente en profil une portion de chaîne à un seul sens de courbure selon l'art antérieur ;

la figure 2 représente en coupe partielle suivant la ligne II-II de la figure 3, une chaîne selon la présente invention ;

la figure 3 est une vue de dessus partielle de la même chaîne ;

les figures 4 et 5 montrent en vues de profil et de dessus, une chaîne selon l'invention comportant en outre un système de réglage de flèche ;

la figure 6 représente une maille de main courante à vitesse variable.

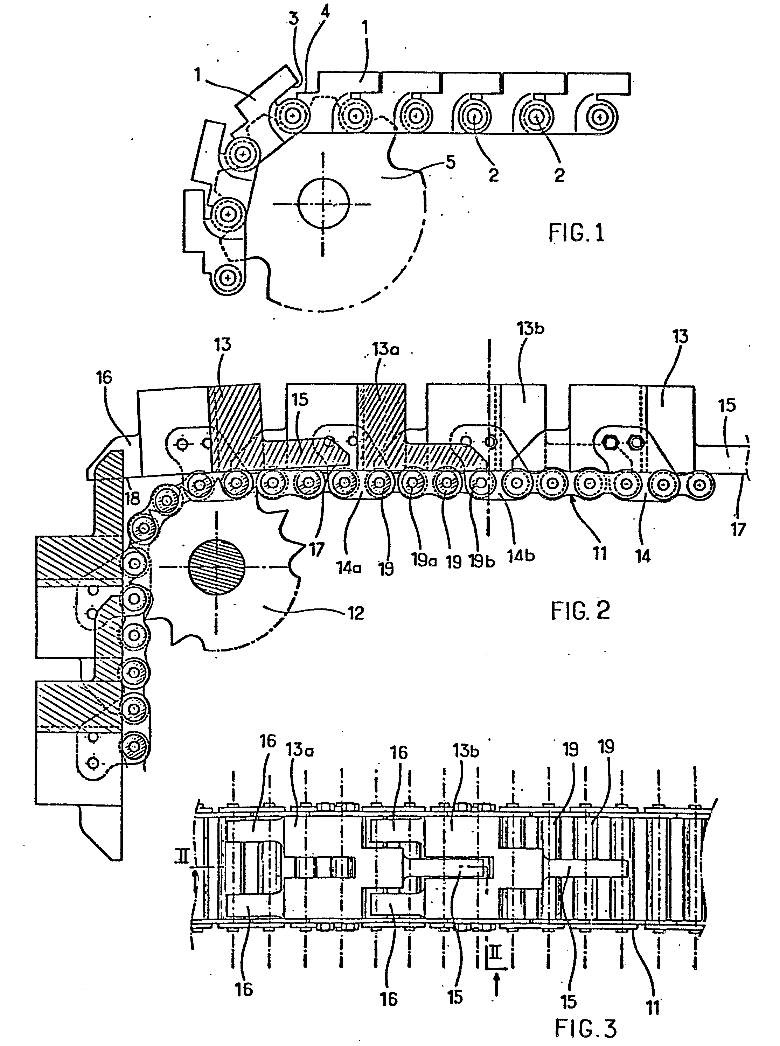

La chaîne de type connu et représentée à la figure 1, est constituée de maillons dont les flasques 1 ont une forme particulière. Les flasques 1 sont reliés l'un à l'autre par un axe 2, comme dans toute chaîne, mais en outre chacun comporte une face 3 qui, dans la réalisation représentée, est parallèle à la ligne des axes 2, et qui vient en appui contre une autre face 4 du maillon contigu. Ces faces en appui pourraient également être les deux faces verticales représentées, ou toutes autres. Ainsi, chaque maillon peut librement pivoter autour d'un axe, mais seulement dans un demi-plan comme le montre la figure. Cette faculté permet notamment à la chaîne de s'enrouler sur un pignon 5 alors que toute courbure est impossible dans l'autre sens, les faces 3 et 4 des maillons successifs venant en appui les unes contre les autres. Le nombre de dents du pignon 5 ne pouvant être librement réduit en raison de problèmes d'interférence, d'effet polygonal, etc..., il en résulte un rayon minimal d'enroulement au-dessous duquel il n'est pas possible de descendre pour un pas donné des maillons. Or, la taille minimale des maillons, donc leur pas minimal, est limitée, en pratique, par des conditions de robustesse, car la chaîne doit être en mesure de supporter un effort perpendiculaire à elle entre deux appuis, et par des conditions de prix de revient car le coût unitaire des flasques de maillons de forme complexe est relativement élevé et leur nombre est important.

Une telle chaîne ne convient donc pas lorsqu'on ne dispose que d'un espace réduit pour effectuer son retournement, c'est-à-dire lorsque l'on doit utiliser des pignons de diamètre faible par rapport aux dimensions générales de la chaîne. La solution à un tel problème consiste donc à combiner une chaîne classique, donc peu coûteuse, à pas suffisamment petit pour accepter des pignons de faible diamètre, avec un moyen l'empêchant de fléchir dans un sens et dont le pas est beaucoup plus grand, donc le nombre d'éléments réduit par rapport au nombre de maillons. C'est ce que réalise la chaîne selon l'invention, représentée aux figures 2 et 3. La figure 2 est une coupe partielle d'une portion de chaîne suivant la ligne II-II de la figure 3 dans sa partie gauche, et une vue extérieure dans sa partie droite.

La chaîne selon l'invention comporte une chaîne classique (11) à articulations dont le pas peut être assez petit pour que le pignon 12 sur lequel elle s'enroule soit d'assez petit diamètre. Ainsi, le nombre de maillons est élevé, mais ceux-ci étant de forme simple et fabriqués en très grandes séries, leur coût est acceptable. Pour que cette chaîne classique 11 ne puisse s'incurver que dans un sens, les flasques 14 d'un maillon de celle-ci, pris à intervalles réguliers, par exemple un sur quatre, sont solidaires d'un bloc 13 placé toujours du même côté de la chaîne 11. Ce bloc 13 comporte principalement des parties 15 et 16 présentant des faces 17 et 18 rectilignes et coplanaires qui viennent tangenter les axes 19 de la chaîne 11. Ces faces 17 et 18 s'étendent respectivement de part et d'autre du flasque particulier 14 sur une longueur égale audit intervalle de manière à être en contact avec les axes 19 de tous les maillons situés entre les flasques 14 du bloc 13 considéré d'une part et respectivement de chaque bloc 13 contigu d'autre part, l'axe 19 contre lequel vient l'extrémité d'une partie 15 ou 16 étant solidaire du flasque 14 d'un bloc 13 contigu. Ainsi, dans le cas représenté à la figure 2, la face 17 de la partie 15 d'un bloc 13a est en contact avec un axe 19b correspondant au flasque 14b du bloc 13b contigu, puis avec deux axes 19 correspondant à des maillons « libres » et enfin, mais facultativement, avec un axe 19a correspondant au flasque 14 du bloc 13a considéré. Il en est de même de la face 18 de la partie 16, mais alors de l'autre côté c'est-à-dire vers l'autre bloc 13 contigu.

Il en résulte que, dans la portion de chaîne 11 comprise entre deux flasques 14 successifs, se trouvent d'une part les parties 15 « vers l'avant » d'un bloc 13 et d'autre part les parties 16 « vers l'arrière » du bloc 13 contigu. Pour que ces parties 15 et 16 puissent chacune être en contact avec les mêmes axes 19 de la chaîne 11, elles sont disposées en quinconce, comme le montre la figure 3 qui est la vue de dessus correspondant à la figure 2, mais dans laquelle deux blocs 13 seulement, disposés dans une portion rectiligne, sont représentés. Par raison de symétrie des efforts, chaque bloc 13 comporte deux parties 16 « vers l'arrière » disposées latéralement et une partie 15 « vers l'avant » placée au centre.

Le fonctionnement d'une telle chaîne à un seul sens de courbure est alors évident. En effet, les faces 17 et 18 des parties 15 et 16 sont dans un plan tangent aux axes 19 solidaires du flasque 14 qui porte le bloc 13 correspondant. Ainsi, chaque maillon voisin est libre de pivoter dans le sens où son axe 19 s'éloigne de la face 517 ou 18 correspondante, par contre, dans l'autre sens, son mouvement est stoppé lorsque l'axe 19 vient en contact contre cette face 17 ou 18. La chaîne n'a donc bien qu'un sens de courbure possible. Comme le montre la figure 2, elle peut librement s'enrouler autour d'un pignon 12 de faible diamètre, tandis que sa rigidité à l'encontre d'un effort perpendiculaire au plan des axes 19 est assurée par les blocs 13. La chaîne étant supposée en appui sur deux pignons 12, cet effort est repris par les parties 15 et 16 qui appuient sur les axes 19 solidaires des blocs 13 contigus, et ceci de proche en proche jusqu'aux pignons 12. Au niveau d'un pignon, la partie 15 ou 16 prend appui sur celui-ci par l'intermédiaire du dernier axe 19 en contact avec le pignon, qui est aussi bien un axe correspondant à un flasque 14, que l'axe d'un maillon libre.

Dès que le maillon correspondant à un flasque 14 s'enroule sur le pignon 12, le bloc 13 correspondant pivote et sa face 17 n'est plus en contact avec les axes 19 de la chaîne 11 (voir le bloc 13 en haut à gauche de la figure 2). Inversement, lorsque ce maillon quitte le pignon, la chaîne 11 étant tendue, la face 17 revient en contact avec les axes 19 (en bas à gauche de la figure 2).

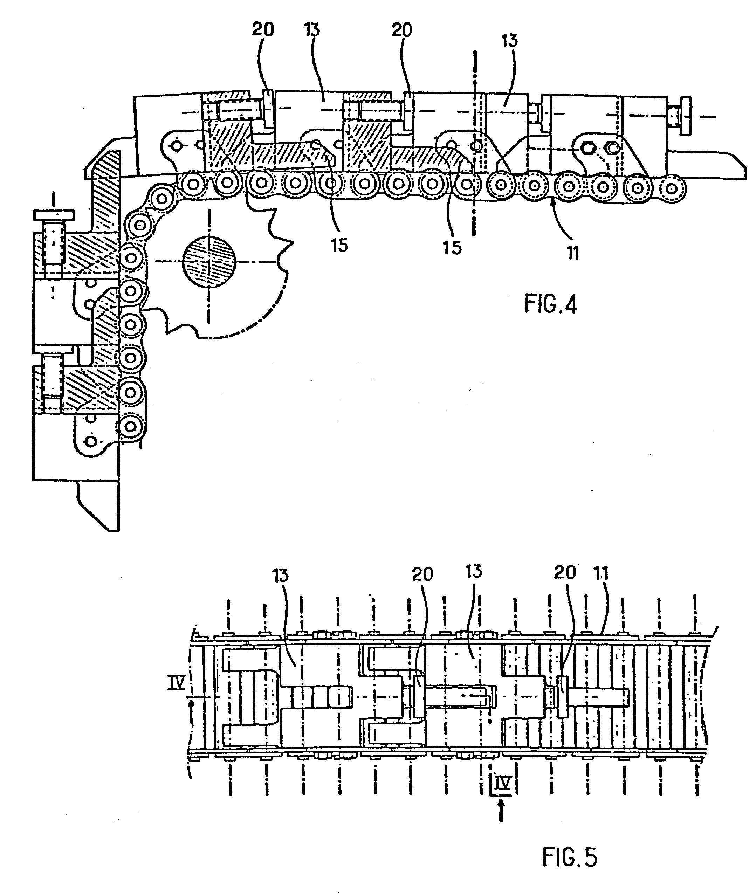

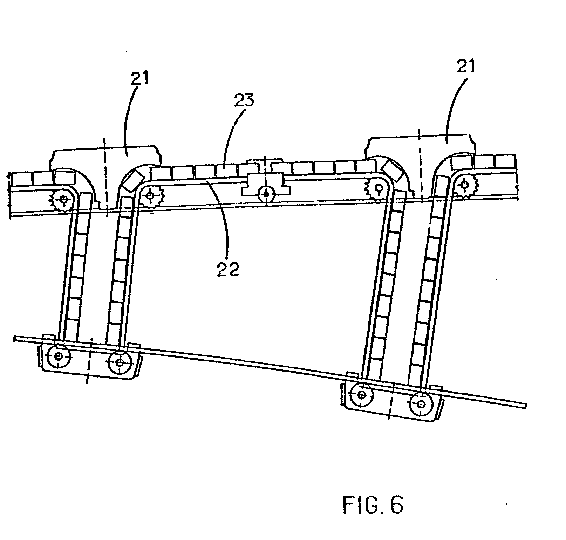

Pour que la chaîne décrite en regard des figures 2 et 3 ait une flèche nulle, il faut que la position des faces 17 et 18 par rapoport à la surface extérieure des axes 19 soit rigoureuse. Or les imprécisions d'usinage d'une part, les déformations et les usures d'autre part peuvent conduire à une flexion « à contre-sens » plus ou moins importante de la chaîne. Pour y remédier, un dispositif complémentaire de réglage est représenté par les figures 4 et 5 qui sont équivalentes aux figures 2 et 3 précédemment décrites. Ce dispositif consiste en une vis 20, ou autre butée réglable, montée dans chaque bloc 13 et dont la tête vient s'appliquer contre une face d'appui d'un bloc 13 contigu. Cette vis 20, en reprenant les efforts de compression existants dans la partie extérieure de la chaîne, remplace ou complète l'action de la partie 15 correspondante (dans le cas représenté) dans la portion de chaîne située entre deux pignons 12 d'appui.

Par contre, la vis 20 qui n'est pas en contact avec la face d'appui correspondante dans les zones d'enroulement autour des pignons 12, ne l'est toujours pas dans les zones précédant (ou suivant) celles-ci sur une longueur égale à l'intervalle entre deux flasques 14 ; ainsi, seule la partie 15 assure l'action « antiflexion » dans ces dernières zones, ce qui explique la nécessité de la maintenir malgré la présence de la vis 20 qui pourrait suffire dans les zones rectilignes.

La chaîne à un seul sens de courbure selon l'invention, est applicable dans des ensembles nombreux et variés. Par exemple, elle peut servir de convoyeur pour marchandises ou bagages, ou de transporteur de personnes ; pour cela les blocs 13 supportent les éléments constituant la surface de travail du convoyeur ou du transporteur, ce sont par exemple des plaques jointives qui forment une surface rectiligne continue.

Un autre exemple d'application représenté à la figure 6, consiste en une main courante à vitesse variable telle que décrite dans la demande de brevet français n° 2 274 523, constituée de poignées individuelles 21 reliées entre elles par une maille 22 déformable à périmètre constant, où la chaîne à un sens de courbure selon l'invention constitue à la fois ladite maille et un appui rigide entre deux poignées. Dans ce cas, les blocs reçoivent chacun un couvercle 23 qui assure la continuité de la surface extérieure.

**Revendications**

1. Chaîne à un seul sens de courbure constituée d'une chaîne classique (11) à articulations surmontée de blocs (13), caractérisée par le fait qu'elle comporte à intervalles réguliers un maillon (14) auquel est fixé un bloc (13) présentant au moins deux faces (17 et 18) rectilignes coplanaires et tangentes aux axes (19) dudit maillon et s'étendant chacune sur une longueur égale audit intervalle, respectivement de part et d'autre dudit maillon (14) dans le sens longitudinal de la chaîne, lesdites faces rectilignes (17 et 18) étant disposées en quinconce.

2. Chaîne à un seul sens de courbure selon la revendication 1, caractérisée par le fait que lesdites faces (17 et 18) sont au nombre de trois, une centrale (17) et deux latérales (18), la face centrale (17) d'un bloc (13a) venant s'intercaler entre les deux faces latérales du bloc contigu (13b).

3. Chaîne à un seul sens de courbure selon l'une des revendications 1 et 2, caractérisée par le fait que chacun desdits blocs (13) comporte en outre un système de réglage (20) venant en appui contre le bloc contigu.

4. Chaîne à un seul sens de courbure selon la revendication 3, caractérisée par le fait que ledit système de réglage consiste en une vis (20) dont la tête vient en appui contre une face verticale du bloc contigu.

5. Main courante pour transporteur à vitesse variable, constituée de poignées individuelles (21) reliées par une maille (22) déformable à périmètre constant caractérisée par le fait que ladite maille (22) est réalisée par une chaîne à un seul sens de courbure selon l'une des revendications 1 à 4.

6. Main courante selon la revendication 5, caractérisée par le fait que lesdits blocs reçoivent chacun un couvercle (23) qui assure la continuité de la surface extérieure.

**Claims**

1. A chain capable of bending in one direction only, said chain comprising a conventional chain (11) fitted with blocks (13), characterised by the fact that at regular intervals the chain has links (14) to which respective blocks (13) are fitted, each block having at least two coplanar rectilinear faces (17 and 18) tangential to the axes (19) of the corresponding link, with each of said faces projecting longitudinally in the chain direction from respective ends of the link over a distance equal to the said interval, said rectilinear faces (17 and 18) being staggered.

2. A chain capable of bending in one direction only according to claim 1, characterised by the fact that there are three of said faces (17 and 18), one of the faces being a central face (17) and the other two being side faces (18), with the central face (17) of one block (13a) being received between the side faces of the adjacent block (13b).

3. A chain capable of bending in one direction only according to claim 1 or 2, characterised by the fact that each of said blocks (13) further includes an adjustment system (20) that bears against an adjacent block.

4. A chain capable of bending in one direction only according to claim 3, characterised by the fact that said adjustment system comprises a screw (20) whose head bears against a vertical face of the adjacent block.

5. A hand rail for a variable speed transporter, the handrail being constituted by a plurality of individual handles (21) interconnected by a deformable loop (22) of constant perimeter, characterised by the fact that the said loop (22) is made from a chain capable of bending in one direction only according to any one of claims 1 to 4.

6. A hand rail according to claim 5, characterised by the fact that each of said blocks receives a cover (23) which ensures continuity of the outer surface.

**Ansprüche**

1. Kette mit nur einer Krümmungsrichtung, bestehend aus einer üblichen Kette (11), über der Blöcke (13) angeordnet sind, dadurch gekennzeichnet, daß sie in regelmäßigem Abstand Kettenglieder (14) aufweist, an denen ein Block (13) befestigt ist, der mindestens zwei geradlinige, in einer Ebene liegende und zu den Achsen (19) des Kettenglieds tangentiale Seiten (17 und 18) aufweist, die sich über eine dem Abstand entsprechende Länge je auf einer der beiden Seiten des betreffenden Kettenglieds (14) in Längsrichtung der Kette erstrecken und versetzt angeordnet sind.

2. Kette mit nur einer Krümmungsrichtung nach Anspruch 1, dadurch gekennzeichnet, daß drei Seiten vorhanden sind, nämlich eine zentrale (17) und zwei seitliche (18), wobei die zentrale Seite (17) eines Blocks (13a) sich zwischen die beiden seitlichen Seiten des angrenzenden Blocks (13b) schiebt.

3. Kette mit nur einer Krümmungsrichtung nach einem der Ansprüche 1 und 2, dadurch gekennzeichnet, daß jeder der Blöcke (13) außerdem ein Regelsystem (20) aufweist, das sich auf dem angrenzenden Block abstützt.

4. Kette mit nur einer Krümmungsrichtung nach Anspruch 3, dadurch gekennzeichnet, daß das Regelsystem aus einer Schraube (20) besteht, deren Kopf sich an einer senkrechten Seite des angrenzenden Blocks abstützt.

5. Handlauf für ein Transportband mit variabler Geschwindigkeit, bestehend aus einzelnen Handgriffen (21), die durch ein verformbares Endlosband (22) mit konstantem Umfang verbunden sind, dadurch gekennzeichnet, daß das Endlosband als Kette mit nur einer Krümmungsrichtung gemäß den Ansprüchen 1 bis 4 ausgebildet ist.

6. Handlauf nach Anspruch 5, dadurch gekennzeichnet, daß die Blöcke je einen Deckel (23) erhalten, der die Kontinuität der äußeren Oberfläche sichert.

0 007 264

FIG.1

FIG. 2

FIG.3

FIG.4

FIG.5

FIG. 6